## Europäisches Patentamt

## European Patent Office

## Office européen des brevets

(19)

(11) Veröffentlichungsnummer: **0 210 243**
**B1**

(12) **EUROPÄISCHE PATENTSCHRIFT** ·

(45) Veröffentlichungstag der Patentschrift: 04.07.90

(21) Anmeldenummer: 86901069.4

(22) Anmeldetag: 01.02.86

(86) Internationale Anmeldenummer:
PCT/EP86/00050

(87) Internationale Veröffentlichungsnummer:
WO 86/04553 14.08.86 Gazette 86/18

(51) Int. Cl.⁵: **B 60 S 1/54,** H 01 H 35/42,
B 60 H 1/00

(54) **KLIMAANLAGE ZUM REGELN DER LUFTTEMPERATUR IN FAHRZEUGEN.**

(30) Priorität: 05.02.85 DE 3503780
07.02.85 DE 3504155
07.02.85 DE 3504156
08.03.85 DE 3508213
15.03.85 DE 3509369

(43) Veröffentlichungstag der Anmeldung:
04.02.87 Patentblatt 87/06

(45) Bekanntmachung des Hinweises auf die
Patenterteilung:
04.07.90 Patentblatt 90/27

(84) Benannte Vertragsstaaten:
AT BE CH DE FR GB IT LI LU NL SE

(73) Patentinhaber: Hölter, Heinz, Dipl.-Ing.
Beisenstrasse 39-41
D-4390 Gladbeck (DE)

(72) Erfinder: IGELBÜSCHER, Heinrich
Marcq-en-Baroeul-Strasse 60
D-4390 Gladbeck (DE)
Erfinder: GRESCH, Heinrich
Franz-Lehàr-Strasse 25
D-4600 Dortmund-Wickede (DE)
Erfinder: DEWERT, Heribert
Bahnhofstrasse 23
D-4390 Gladbeck (DE)
Erfinder: TISCHENDORF, Joachim
Königsberger Strasse 59
D-5100 Aachen (DE)
Erfinder: HÖLTER, Heinz
Beisenstrasse 39-41
D-4390 Gladbeck (DE)

(74) Vertreter: Spalthoff, Adolf, Dipl.-Ing.
Pelmanstrasse 31 Postfach 34 02 20
D-4300 Essen 1 (DE)

(56) Entgegenhaltungen:
EP-A- 92 448          FR-A-1 224 161
DE-A-2 063 764     GB-A- 884 967
DE-A-2 911 428     US-A-2 675 094
DE-U-7 809 822     US-A-3 870 495

Patent Abstracts of Japan, Vol.8, no.12 (M-269)(1449),19.01.1984, & JP,A,58174019 (Diesel Kiki K.K.) 13. Oktober 1983

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**EP  0 210 243  B1**

(56) Entgegenhaltungen:
    Patent Abstracts of Japan, Vol.4, no.154 (M-
    38)(639),28.10.1980, Seite 140 M 38, & JP, A,
    55106813 (Matsushita Denki Sangyo K.K.) 16.
    August 1980

## Beschreibung

Die Erfindung betrifft eine Klimaanlage zum Regeln der Lufttemperatur in Fahrzeugen mit einem Ventilator und Luftdüsen im Bereich der Fahrzeugscheiben, wobei ein Sensor auf der Innenseite der Fahrzeugscheiben angeordnet ist, mit dem die Kondensation von Wasserdampf auf der Fahrzeugscheibe erfaßt wird, und daß beim Beschlagen der Fahrzeugscheiben der Ventilator eingeschaltet und die Luftdüsen zur Freihaltung der Scheiben mit Luft beaufschlagt werden, und der Sensor mit einem Paar von Elektroden ausgerüstet ist.

Eine derartige Klimaanlage ist bekannt durch die GB—A—884967. Bei dieser bekannten Klimaanlage findet eine Schaltungsanordnung Verwendung, welche aus mehreren Sensoren sowie einer Vielzahl elektronischer Bauteile besteht und sich insoweit als vergleichsweise aufwendig gestaltet.

Von diesem Stand der Technik ausgehend liegt der Erfindung die Aufgabe zugrunde, unter Vermeidung vorerwähnter Nachteile eine Klimaanlage der eingangs genannten Art dahingehend zu verbessern, daß mit dieser in einfacher und schneller Weise ein Beschlagen der Innenseiten der Scheiben von Kraftfahrzeugen in kürzester Zeit beseitigt, wenn nicht gar weitgehend vermieden wird.

Erfindungsgemäß wird dies dadurch erreicht, daß das Paar von Elektroden innerhalb einer elektrisch nicht leitenden Trägerfolie angeordnet ist, und die Enden der Elektroden unter Bildung einer Kontaktfläche zwischen sich aus der Trägerfolie austreten. Die Elektroden sind in eine an sich bekannte Widerstandsschaltung eingeschaltet.

Vorteilhaft bestehen die Elektroden aus Draht, so daß eine gute Leitfähigkeit gegeben ist. Die Elektroden können aus korrosionsbeständigem Material hergestellt sein, so daß eine hohe Lebensdauer des Sensors gewährleistet ist. Bei trockener Oberfläche besitzt der Abstand zwischen den beiden freien Drahtenden einen sehr hohen elektrischen Widerstand, welcher sich jedoch ganz erheblich verringert, sobald sich auf der Oberfläche der Trägerfolie Wasserdampf kondensiert. Diese Widerstandsänderung wird in einer elektrischen Schaltung zur Widerstandsmessung erfaßt, so daß ein Steuerimpuls gegeben wird, welcher zur Einschaltung einer Klimaanlage und/oder eines Ventilators usw. Verwendung finden kann.

Die Erfindung ist an Hand eines Ausführungsbeispiels näher näher erläutert, und zwar zeigt:

Figur 1 eine Seitenansicht eines Sensors auf einer geschnittenen Scheibe und

Figur 2 eine elektrische Schaltung für den Sensor.

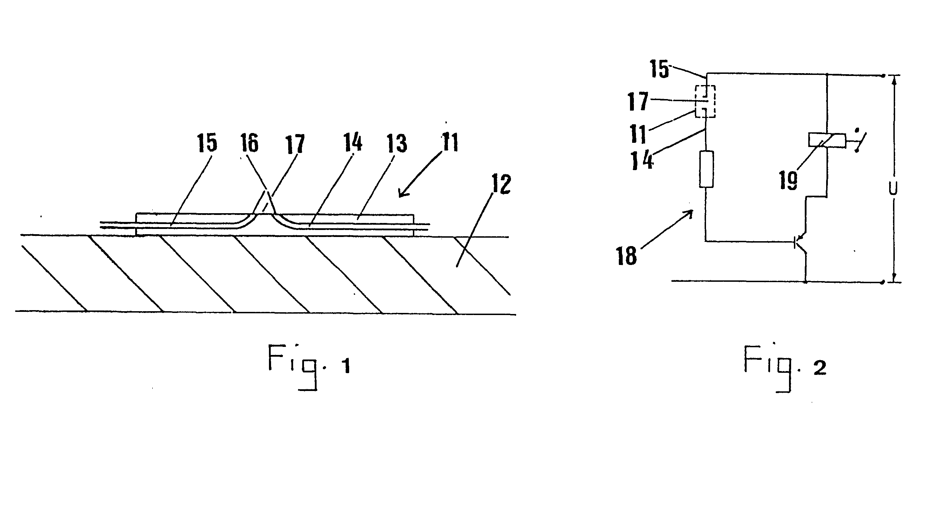

In Figur 1 ist der Sensor 11 dargestellt, welcher sich auf der Innenseite einer Scheibe 12, vorzugsweise der Frontscheibe, eines Kraftfahrzeuges befindet.

Der Sensor 11 weist eine elektrisch nicht leitende Trägerfolie 13 auf, in die elektrische Elektroden 14, 15 eingelegt sind. Die einander zugewandten freien Enden 16 der Elektroden 14, 15 sind zur Innenseite der Trägerfolie 11 hin abgebogen, und zwar derart, daß diese aus der Oberfläche der Trägerfolie 11 austreten und mit dieser bündig verlaufen. Zwischen den freien Enden 16 der beiden Elektroden 14, 15 verbleibt ein Zwischenraum 17.

Für den Fall, daß die innenseitige Oberfläche der Trägerfolie 11 trocken ist, besteht zwischen den beiden freien Enden 16 der eingelegten Elektroden 14, 15 ein vergleichsweise sehr hoher elektrischer Widerstand. Dieser verringert sich in erheblichem Maße, sobald sich auf der Oberfläche der Trägerfolie 4 Feuchtigkeit niederschlägt, da die Feuchtigkeitsschicht in dem Zwischenraum 17 zwischen den beiden freien Enden 16 eine praktisch leitende Verbindung ausbildet.

Wie aus Figur 2 ersichtlich, ist der Sensor 11 in eine elektrische Schaltung 18 zur Widerstandsmessung eingebunden.

Sobald der Widerstand zwischen den freien Enden 16 der beiden Elektroden 14, 15 stark absinkt, spricht das Schaltglied 19 der Schaltung 18 an, so daß weitere Stellglieder, Steuerungen usw. betätigt werden können, wie z.B. das Einschalten einer Klimaanlage, eines Ventilators usw.

## Patentansprüche

1. Klimaanlage zum Regeln der Lufttemperatur in Fahrzeugen mit einem Ventilator und Luftdüsen im Bereich der Fahrzeugscheiben, wobei ein Sensor (11) auf der Innenseite der Fahrzeugscheiben angeordnet ist, mit dem die Kondensation von Wasserdampf auf der Fahrzeugscheibe erfaßt wird, und daß beim Beschlagen der Fahrzeugscheiben der Ventilator eingeschaltet und die Luftdüsen zur Freihaltung der Scheiben mit Luft beaufschlagt werden, und der Sensor (11) mit einem Paar von Elektroden (14, 15) ausgerüstet ist, dadurch gekennzeichnet, daß das Paar von Elektroden (14, 15) innerhalb einer elektrisch nicht leitenden Trägerfolie (13) angeordnet ist, und die Enden (16) der Elektroden unter Bildung einer Kontaktfläche (17) zwischen sich aus der Trägerfolie (13) austreten.

2. Klimaanlage nach Anspruch 1, dadurch gekennzeichnet, daß die Elektroden (14, 15) aus Draht bestehen.

3. Klimaanlage nach Anspruch 1 oder 2, dadurch gekennzeichnet, daß die Elektroden (14, 15) aus korrosionsbeständigem Material hergestellt sind.

## Revendications

1. Installation de climatisation pour le réglage de la température de l'air dans des véhicules, comprenant un ventilateur et des buses d'air dans la zone des vitres du véhicule, un capteur (11) étant placé sur la face interne des vitres du véhicule et enregistrant la condensation de la vapeur d'eau sur la vitre de telle sorte que le ventilateur soit mis en route lorsque les vitres se couvrent de buée et que de l'air soit envoyé aux buses pour chasser la buée des vitres, et le capteur (11) étant équipé d'une paire d'électrodes (14, 15), caractérisée par le fait que la paire d'électrodes (14, 15) est installée à l'intérieur d'une feuille support (13) électriquement non-conductrice et que les extrémités (16) des électrodes sortent de la feuille support (13) en formant une surface de contact (17) entre elles.

2. Installation de climatisation selon la revendication 1, caractérisée par le fait que les électrodes (14, 15) sont constituées par un fil métallique.

3. Installation de climatisation selon la revendication 1 ou 2, caractérisée par le fait que les électrodes (14, 15) sont réalisées en un matériau résistant à la corrosion.

**Claims**

1. Air conditioning installation for regulating the air temperature in motor vehicles with a ventilator and air nozzles in the region of the vehicle glass, there being disposed on the inner side of the vehicle glass a sensor (11) by means of which the condensation of water vapour on the vehicle glass is detected; and in that when the vehicle glass mists up the ventilator is switched on and the air nozzles are acted upon by air in order to keep the glass clear, and the sensor (11) is provided with a pair of electrodes (14, 15), characterised in that the pair of electrodes (14, 15) is disposed inside an electrically non-conductive carrier film (13), and the ends (16) of the electrodes emerge from the carrier film (13) forming a contact surface (17) between themselves.

2. Air conditioning installation according to Claim 1, characterised in that the electrodes (14, 15) consist of wire.

3. Air conditioning installation according to Claim 1 or 2, characterised in that the electrodes (14, 15) are produced from a corrosion resistant material.

15 16 17 14 13 11

12

Fig. 1

15
17
11
14

19

18

U

Fig. 2

EP 0 210 243 B1